# EUROPEAN PATENT SPECIFICATION

(11) **EP 0 542 440 B1**
(45) Date of publication and mention of the grant of the patent: **06.03.1996**
(21) Application number: 92309680.4
(22) Date of filing: 22.10.1992
(51) Int. Cl.: H01Q 25/02, H01Q 3/26, G01S 7/28

(54) **Processing method for antenna patterns**
Verarbeitungsverfahren für Antennendiagramme
Méthode de traitement pour diagrammes d'antenne

(30) Priority: 13.11.1991 JP 323952/91; 13.11.1991 JP 323953/91
(43) Date of publication of application: 19.05.1993
(73) Proprietor: NATIONAL SPACE DEVELOPMENT AGENCY OF JAPAN, Minato-ku Tokyo (JP)
(72) Inventor: Sezai, Toshihiro, c/o National Space Development, Minato-ku, Tokyo (JP)
(74) Representative: W.P. Thompson & Co.

(56) References cited:
- WO-A-91/01620
- DE-A- 2 315 241
- JP-A-52 004 147
- US-A- 4 599 622
- US-A- 5 017 929

## Description

The present invention relates to a method of processing antenna patterns in an antenna apparatus of a monopulse power feed system, and relates in particular to a two-dimensional beam compression processing method which compresses antenna patterns two-dimensionally, and also to an antenna pattern processing method which can compress the beam width of the antenna patterns two-dimensionally and can reduce side lobes.

Generally, the beam width and side lobe serve as indices representing the efficiency of antenna patterns; the smaller the beam width is or the smaller the side lobe is, the better the antenna pattern performance. This does not only apply to antennas for receiving.

However, there is an opposed relationship between the beam width and the side lobe, the beam width being in inverse proportion to the size (length) of the antenna. That is, when the size of antenna is fixed, the side lobe will be larger if one tries to set the beam width smaller, and the beam width will be larger if one tries to set the side lobe smaller. When it is permitted to change the size of antenna, the antenna will be larger if one tries to set the beam width smaller, and the beam width will be larger if one tries to make the antenna smaller.

Therefore, for example, in a radar antenna, as a result of the relationship between the beam width and the side lobe, the resolution capability becomes worse, the identification capability for objects is reduced, and a multiplicity of objects might be mistaken for one object, because the beam width is widened when the side lobe is made smaller. Conversely, when the beam width is made smaller, the side lobe is made larger, and therefore, when there is an object in the direction of the side lobe, an erroneous judgment that there is an object in the observation direction might be made, even if there is no object in that direction. Moreover, as a result of the relationship between the beam width and the size of the antenna, when the beam width is reduced to half and the identification level is doubled, the size of the antenna will also be doubled. If the size is doubled, not only is the region occupied by the antenna larger, but also various adverse effects occur such as an increase in the weight of the antenna and the tendency of the antenna support structure to be larger. Conversely, when the size of the antenna is reduced by a half, the beam width is doubled, and the identification level is worse by 50%.

Thus, the beam width and the side lobe having opposed natures, it is impossible to optimize both of them together, so the beam width and the side lobe are subject to a compromise to a certain degree, taking into consideration the distribution for minimizing the beam width under the condition of a certain size of side lobe, or one for minimizing the side lobe under that of a certain beam width, such as Chebyshev distribution. Since the beam width and the size of an antenna have an opposed nature as described, and since practical antennas often have a restriction such as the space to be occupied by the antenna, the beam width is subject to compromise in a certain degree in the actual practical situation.

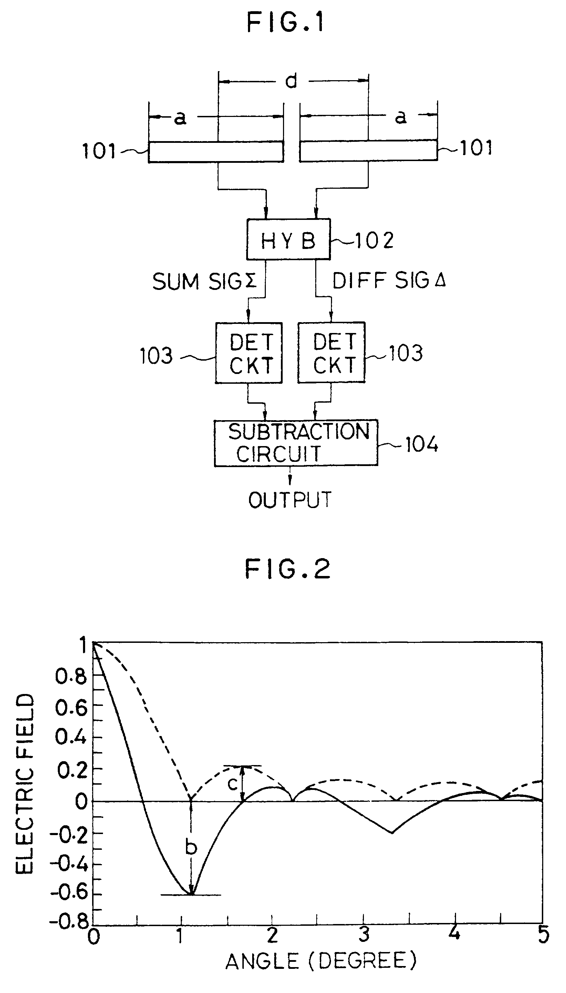

In order to improve these problems partly, a beam compression method is known, for example from JP-A- 52 4147 for narrowing the beam width by subtracting a difference signal pattern of each received signal from a sum signal pattern of each received signal from the same two antennas of a monopulse power feed system. Fig.1 of the accompanying drawings shows such an antenna apparatus for performing beam compression. Numerals 101,101 denote antennas of the monopulse power feed system having length a and distance d between their centres. Numeral 102 denotes a hybrid circuit (HYB) for forming a sum signal Σ and a difference signal Δ for each received signal in the two antennas 101,101. Numerals 103 denote detection circuits for detecting the sum signal Σ and the difference signal Δ, and numeral 104 denotes a subtraction circuit for outputting an antenna output signal after subtracting the difference signal Δ from the sum signal Σ.

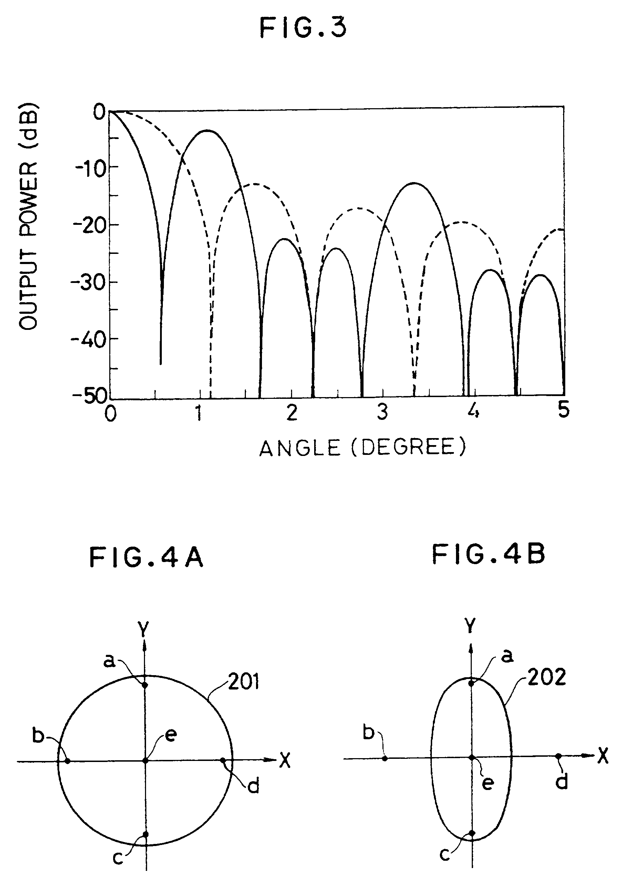

Fig.2 and Fig.3 illustrate the result of simulation when horn antennas, each of which has a length with "a" set about 25.7 times as long as the received wavelength and the distance between their centres set at the same value as length "a" are used as the antennas 101,101. These figures illustrate field patterns (Fig.2) and power patterns (Fig.3) normalized on the basis of the value in the direction where the angle is at zero degrees, while the aperture surface distribution of the antennas is assumed to be a uniform distribution. In these figures for patterns, broken lines show the sum signal Σ and solid lines show output patterns; from these patterns it is understood the beam compression is performed.

According to the conventional beam compression method as described, the sum signal patterns of the original antenna patterns are made subject to beam compression. However, large side lobes are generated in the output patterns as evident in Fig.2 and Fig.3. That is, in a near point where the value of the sum signal Σ takes zero for the first time, the value of the difference signal Δ shows a maximum value, then the value obtained by subtracting the value of the difference signal Δ from that of the sum signal Σ, is negative as shown in fig.2, but the value b is much larger than the size c of the side lobe of the sum signal pattern. Therefore, in some conventional beam compression methods, a side lobe is enlarged at the point where the difference signal Δ is larger than the sum signal Σ. Consequently, although beam compression can be achieved, the side lobe will be considerably larger than desired.

Moreover, in the conventional method for performing beam compression, only one antenna system comprises the same two antennas of the monopulse power feed system, and the method only allows beam width to be compressed one-dimensionally, and its identification capability is not sufficient. That is, for example, if a main beam pattern when beam compression is not performed at all comprises a pattern 201 as shown in Fig.4A, it is impossible to identify the objects a,b, c, d and e, in this case. If this pattern is compressed in the direction X one dimensionally, its resulting main beam pattern 202 is as shown in Fig.4B, and the identification capability is improved compared to the case in which beam compression is not performed. However, the identification capability is not sufficient, because it is still impossible to identify the objects a, c and e.

The present invention seeks to solve the problems in the conventional beam compression methods as described, and a first object is to provide a method for improving the identification capability by performing beam compression two dimensionally.

A second object of the present invention is to provide a processing method for antenna patterns for improving the identification capability by performing beam compression two-dimensionally, and enabling side lobes to be reduced two-dimensionally.

In order to achieve the first object, in accordance with the present invention, there is provided a method of processing antenna patterns from an antenna device composed of a first antenna system comprising two similar antennas of a monopulse power feed system disposed so as to lie in a first direction corresponding to a direction in which beam width is to be compressed, and a second antenna system comprising two further similar antennas of the monopulse power feed system disposed so as to lie in a second direction extending at right angles to said first direction, with the central axis of the second antenna system coinciding with the central axis of the first antenna system, the method characterised by the steps of scanning the antenna beam of the antenna device in directions which exclude said first and second directions, adding a signal obtained by subtracting a first difference signal Δ₁, representative of the difference between the received signals of the two antennas of the first antenna system, from a first sum signal Σ₁, representative of the sum of the received signals of the two antennas of the first antenna system, to a signal obtained by subtracting a second difference signal Δ₂, representative of the difference between the received signals from the two antennas of the second antenna system, from a second sum signal Σ₂, representative of the sum of the received signals from the two antennas of the second antenna system, the signal resulting from said addition forming an output signal of the antenna device to achieve two-dimensional beam compression.

In the two-dimensional beam compression method thus obtained, an output signal in which the beam width in the first direction is compressed can be obtained, by subtracting the difference signal Δ₂ of the received signal of the two antennas in the first antenna system from the sum signal Σ₁ of that system. Moreover, an output signal in which the beam width in the second direction is compressed can be obtained, by subtracting the difference signal Δ₂ of the received signal of the two antennas in the second antenna system from the sum signal Σ₂ of that system. Consequently, an antenna output signal having two-dimensional beam compression in the first direction and the second direction can be obtained, by adding these output signals.

In order to achieve the second object of the present invention,in addition to the first mentioned steps, the method further comprises the step of arranging for said output signal to be zero when the value of the first sum signal Σ₁ from said first antenna system is equal to or smaller than the value of said first difference signal Δ₁ of that system, or when the value of the second sum signal Σ₂ from said second antenna system is equal to or smaller than the value of the second difference signal Δ₂ of that system, to perform two-dimensional beam compression and two-dimensional reduction in the side lobe.

In the processing method for antenna patterns thus obtained, an output signal in which the beam width in the first direction is compressed can be obtained, by subtracting the difference signal Δ₁ of the received signals from the two antennas in the first antenna system from the sum signal Σ₁ of that system. Moreover, an output signal in which the beam width is compressed in the second direction can be obtained by subtracting the difference signal Δ₂ of the received signals from the two antennas in the second antenna system from the sum signal Σ₂ of that system. Then, an antenna output signal having two-dimensional beam compression in the first direction and the second direction can be obtained, by adding these output signals. Still further, zero is outputted when the values of each sum signal Σ₁Σ₂ of the first and second antenna system is equal to or smaller than the values of each difference signal Δ₁Δ₂. Therefore, the side lobes in the first and the second directions are reduced. That is, as a side lobe grows large in the part where the value of the difference signal is larger than the value of the sum signal, the side lobe will be reduced if the output in that part is made zero. Therefore, while the beam can be compressed two-dimensionally, the side lobe can also be reduced two-dimensionally.

The invention is described further hereinafter, by way of example only, with reference to the accompanying drawings, in which:-
Fig.1 is a schematic illustration of a conventional antenna apparatus of a monopulse power feed system for performing one dimensional beam compression;
Fig.2 illustrates field patterns of output signals from the antenna apparatus shown in Fig.1;
Fig.3 illustrates power patterns of output signals from the antenna apparatus shown in Fig.1;
Fig.4A and 4B are explanatory drawings for explaining the identification capability of a main beam;
Fig.5 is a schematic block diagram of an antenna apparatus used for explaining a first embodiment of a processing method for antenna patterns relating to the present invention;
Fig.6A and 6B illustrate resultant patterns obtained in an antenna apparatus shown in Fig.5;
Fig.7 is an explanatory drawing of a two-dimensional compression main beam pattern for explaining the improvement of the identification capability by using two-dimensional beam compression;
Fig.8 is a drawing of a practical constructional embodiment of each antenna system of an antenna apparatus used in the performance of an embodiment of the present invention;
Fig.9 is a circuit diagram of a practical constructional embodiment of a signal processing section;
Fig.10 is a schematic block diagram of an antenna apparatus for describing a second embodiment of the present invention;
Fig.11A and 11B illustrate resultant patterns obtained from the antenna apparatus shown in Fig.10;
Fig.12 is a circuit diagram of a practical constructional embodiment of a signal processing section; and
Fig.13 illustrates a pattern of the output signal in the case of using the difference signals Δ1,Δ2 multiplied a coefficient.

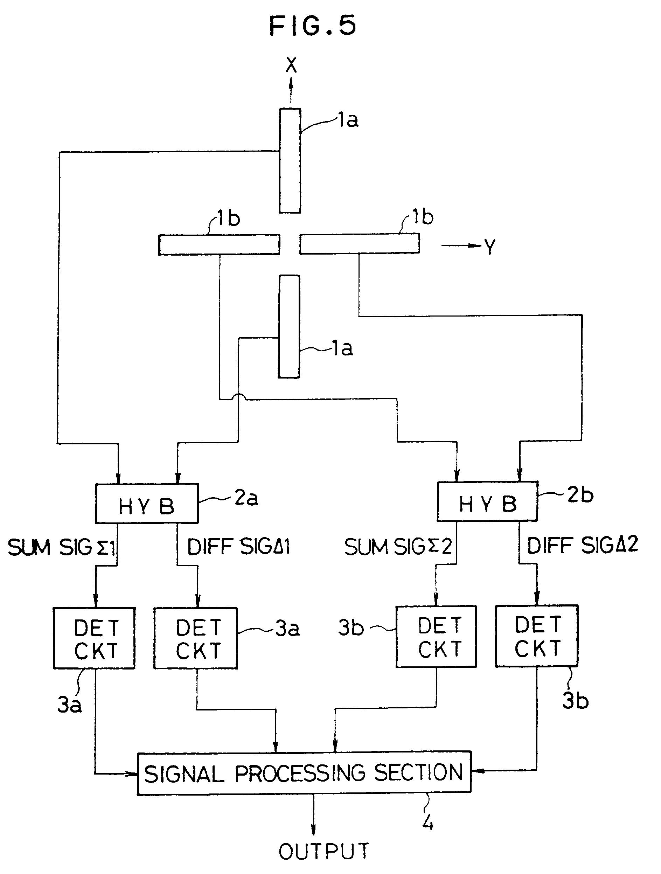

Referring first to Fig.5, there is illustrated a schematic block diagram of an antenna apparatus to describe a first embodiment of the processing method for the antenna pattern in accordance with the present invention. This embodiment utilises a two-dimensional beam compression method for antenna patterns to achieve the first object of the present invention. In the figure, numerals la,la denote two receiving antennas of a monopulse power feed system having the same structure, e.g. horn antennas or array antennas, disposed in a first direction (direction X), and forming a first antenna system. Numerals 1b, 1b also denote two receiving antennas of a monopulse power feed system having the same structure, e.g. horn antennas or array antennas, but disposed in a second direction (direction Y) lying at right angles to the first direction, and forming a second antenna system. Numerals 2a,2b denote hybrid circuits (HYB). Hybrid circuit 2a forms a sum signal Σ1 and a difference signal Δ1 for each received signal from the two antennas 1a,1a of the first antenna system, and hybrid circuit 2b forms a sum signal Σ2 and a difference signal Δ2 for each received signal from the two antennas 1b,1b of the second antenna system. Numerals 3a,3a,3b and 3b denote detection circuits, and numeral 4 denotes a signal processing section which outputs a signal after processing the addition of a signal obtained by subtracting the difference signal Δ1 from the sum signal Σ1 and a signal obtained by subtracting the difference signal Δ2 from the sum signal Σ2, which signals are demodulated in each detection circuit.

In an apparatus of this construction, if radio waves arrive at, in the case of scanning antenna beam, directions except the direction X and the direction Y, hybrid circuit 2a, which receives signals from the first antenna system, outputs a sum signal Σ1 corresponding to the sum signal pattern and a difference signal Δ1 corresponding to the difference signal pattern. Moreover, hybrid circuit 2b which receives signals from the second antenna system outputs a sum signal Σ2 corresponding to the sum signal pattern and a difference signal Δ2 corresponding to the difference signal pattern. After these signals are demodulated in the detection circuits 3a,3a,3b,3b respectively, an output corresponding to a pattern whose beam width is compressed two-dimensionally can be obtained, by performing signal processing to perform the addition of a signal obtained by subtracting the difference signal Δ1 from the sum signal Σ1 and a signal obtained by subtracting the difference signal Δ2 from the sum signal Σ2 in the signal processing section 4.

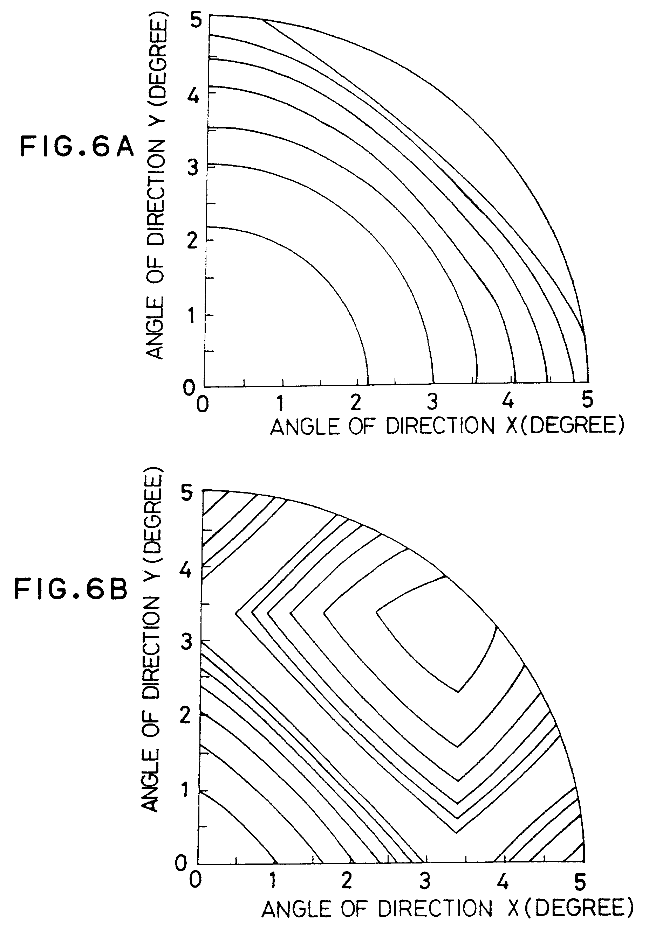

Fig.6A and 6B illustrate the results of simulation using square-shaped horn antennas, whose length at one side is six times as long as the received wavelength, as the antennas forming the first and the second antenna systems, and using antenna systems forming the first and the second antennas wherein the distance between their centres is set at about 8.48 times as long as the received wavelength. In this case, every aperture distribution of any antenna is assumed to be a uniform distribution. Fig.6A illustrates a pattern obtained by adding the received signals of the four square-shaped horn antennas forming each antenna system, and Fig.6B illustrates a pattern when two-dimensional beam compression is performed. These patterns are shown as contour drawings, and the values of -3, -6, -9, -12, -15, -18 and -21 in dB are indicated relative to the value of the origin. It can be found that the beam width in the direction X and the direction Y is reduced by half approximately two-dimensionally, judging from these patterns.

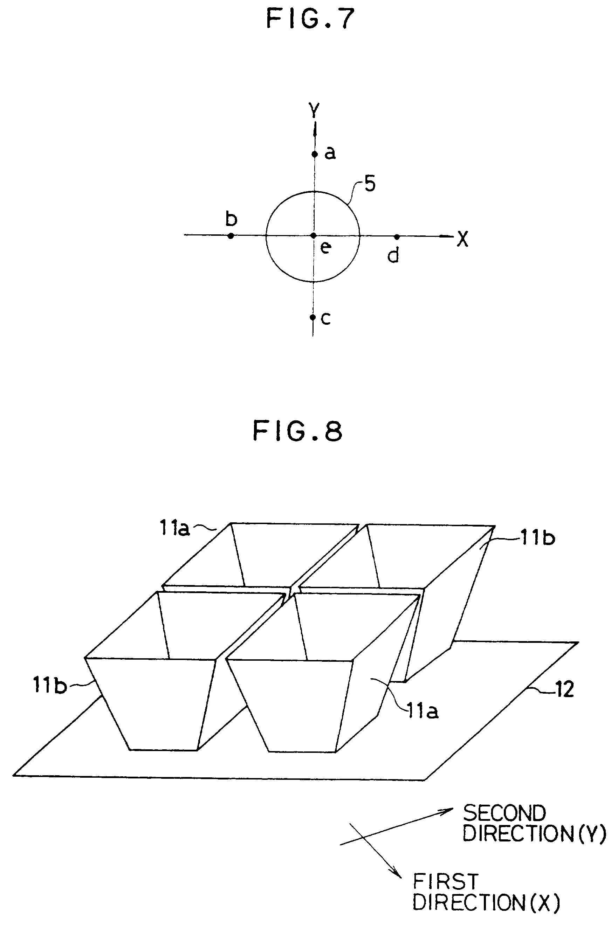

Further, Fig.7 illustrates how the identification capability is improved when beam compression is performed two-dimensionally, with the same typical drawing as Fig.4A and Fig.4B. That is, if beam compression is performed two-dimensionally, the resulting beam has the pattern 5, and it will be understood that it becomes possible to identify each object of a,b,c,d and e and the identification capability is improved.

Fig.8 is a practical constructional embodiment of each antenna system of the antenna apparatus. In this embodiment, the first and the second antenna systems are formed by rectangularly-shaped horn antennas 11a,11a,11b,11b. The antennas 11a,11a of the first antenna system are placed to lie in the first direction (direction X), and the antennas 11b,11b of the second antenna system are placed to lie in the second direction (direction Y) while the central axis of the antennas constituting the first antenna system is arranged to correspond to the central axis of the first antenna system. Numeral 12 denotes a supporting plate for the antenna systems.

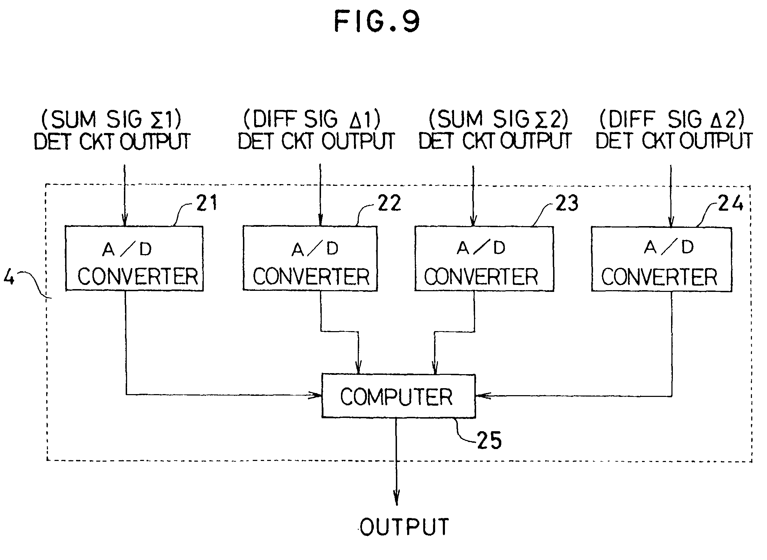

Generally, differential amplifiers and adding circuits can be used in a signal processing section when the processing is performed analogically. Moreover, it is possible to use existing techniques for the means that subtract and add, using a computer, after converting the outputs from the detection circuits into digital signals with A/D converters in the case of digital processing. One such embodiment is shown in Fig.9. In Fig.9, numerals 21,22,23 and 24 are A/D converters for converting the analog sum signal Σ1, the difference signal Δ1, the sum signal Σ2 and the difference signal Δ2, demodulated by the detection circuits, into digital signals respectively; numeral 25 is a computer which is arranged to perform the process of adding a signal, obtained by subtracting the digital difference signal Δ1 from the sum signal Σ1, to a signal obtained by subtracting the difference signal Δ2 from the sum signal Σ2.

As described hereinbefore, according to the described embodiment, the first antenna system disposed in the first direction (direction X) and the second antenna system disposed in the second direction (direction Y) are used, and it is constructed such as to output the signal obtained by adding a signal, obtained by subtracting the difference signal of the first antenna system, which is obtained by scanning in all directions except for the first and the second directions, from the sum signal, to a signal obtained by subtracting the difference signal of the second antenna system from the sum signal, whereby beam width can be compressed two-dimensionally, and it is possible to improve the identification capability.

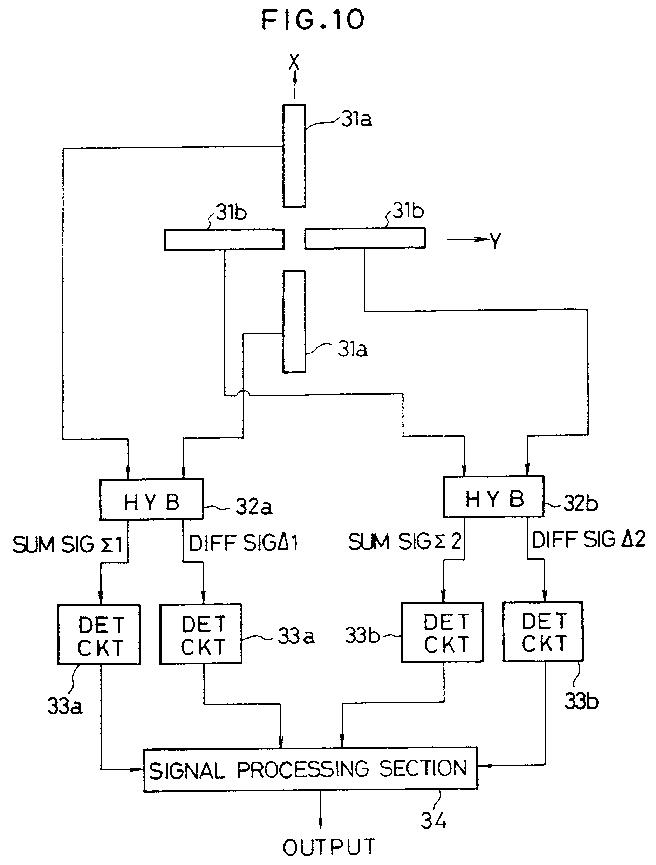

The second embodiment of the present invention will now be described. This embodiment relates to a method for two-dimensional beam compression and two-dimensional side lobe reduction in order to achieve the second object of the present invention. Fig.10 is a schematic block diagram of an antenna apparatus for use in explaining the second embodiment of the present invention. In Fig.10, numerals 31a,31a denote two receiving antennas of a monopulse power feed system having the same structure, for example horn antennas or array antennas, disposed so as to lie in a first direction (direction X), and forming a first antenna system. Numerals 31b,31b also denote two receiving antennas of the monopulse power feed system having the same structure, for example horn antennas or array antennas, disposed so as to lie in a second direction (direction Y) lying at right angles to the first direction, and forming a second antenna system. Numerals 32a,32b denote hybrid circuits (HYB). Hybrid circuit 32a forms a sum signal Σ1 and a difference signal Δ1 for each received signal from the two antennas 31a,31a of the first antenna system, and hybrid circuit 32b forms a sum signal Σ2 and a difference signal Δ2 for each received signal from the two antennas 31b,31b of the second antenna system. Numerals 33a,33a,33b and 33b denote detection circuits. Numeral 34 denotes a signal processing section which outputs a signal formed by the addition of a signal obtained by subtracting the difference signal Δ1 from the sum signal Σ1 and a signal obtained by subtracting the difference signal Δ2 from the sum signal Σ2, which signals are demodulated in each detection circuit. Section 34 outputs zero when the sum signal Σ1 is equal to or smaller than the difference signal Δ1 or when the sum signal Σ2 is equal to or smaller than the difference signal Δ2.

In an apparatus constructed like this, if in the case of scanning antenna beam, radio waves arrive in directions except the direction X and the direction Y, hybrid circuit 32a receiving input signals from the first antenna system outputs a sum signal Σ1 corresponding to the sum signal pattern and a difference signal Δ1 corresponding to the difference signal pattern. Moreover, hybrid circuit 32b receiving input signals from the second antenna system outputs a sum signal Σ2 corresponding to the sum signal pattern and a difference signal Δ2 corresponding to the difference signal pattern. After these signals are demodulated in the detection circuits 33a,33a,33b,33b, respectively, signal processing to obtain the addition of a signal obtained by subtracting the difference signal Δ1 from the sum signal Σ1 and a signal obtained by subtracting the difference signal Δ2 from the sum signal Σ2 is performed in the signal processing section 34. The latter section 34 is arranged to output zero when the sum signal Σ1 is equal to or smaller than the difference signal Δ1 or when the sum signal Σ2 is equal to or smaller than the difference signal Δ2. Therefore, an output corresponding to the pattern in which beam width is compressed two-dimensionally, and which the side lobe is reduced two-dimensionally, can be obtained.

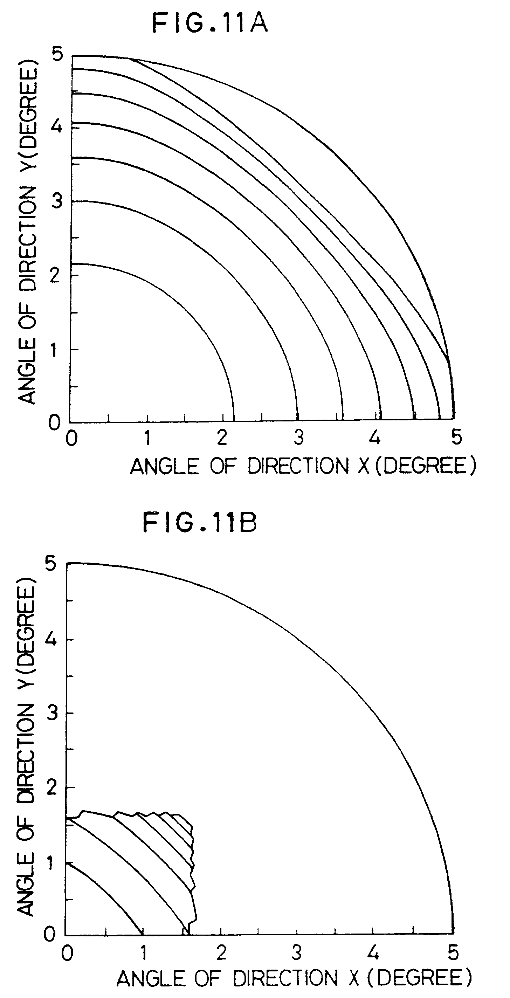

Fig.11A and 11B illustrate the results of a simulation using square-shaped horn antennas, whose length at one side is six times as long as the received wavelength, as antennas forming the first and the second antenna systems and arranging the antenna systems forming the first and the second antennas with the distance between their centres to be about 8.48 times as long as the received wavelength, as in the first embodiment. In this case, every aperture distribution of any antenna is assumed to be a uniform distribution. Fig.11A illustrates a pattern obtained by adding the received signals of the four square-shaped horn antennas forming the antenna systems, and Fig.11B illustrates a pattern obtained when two-dimensional beam compression and two-dimensional side lobe reduction are performed. The latter patterns are shown as contour drawings, and the values of -3, -6, -9, -12, -15, -18 and -21 in dB are indicated relative to the value of the origin. It can be found by inspection of these patterns that the beam width in the direction X and the direction Y is made approximately half two-dimensionally and the side lobe is reduced two-dimensionally.

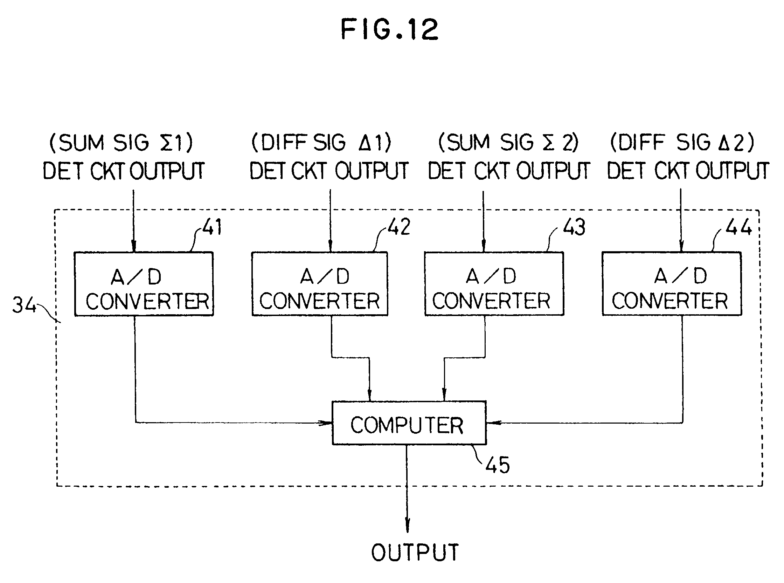

As a practical constructional embodiment of each antenna system of an antenna apparatus of this embodiment, it is possible to use the same construction as in the first embodiment shown in Fig.8. Generally differential amplifiers and adding circuits can be used in the signal processing section when the processing is performed analogically. Moreover, it is possible to use existing techniques, such as to use a computer for subtracting and adding after converting the outputs of the detection circuits into digital signals with A/D converters. One such embodiment is shown in Fig.12. In this figure numerals 41,42,43 and 44 identify A/D converters for converting the analog sum signal Σ1, the difference signal Δ1, the sum signal Σ2 and the difference signal Δ2 demodulated by the detection circuits into digital signals respectively; numeral 45 identifies a computer which is arranged to perform the process of adding a signal obtained by subtracting the digital difference signal Δ1 from the sum signal Σ1, to a signal obtained by subtracting the difference signal Δ2 from the sum signal Σ2, otherwise outputting zero.

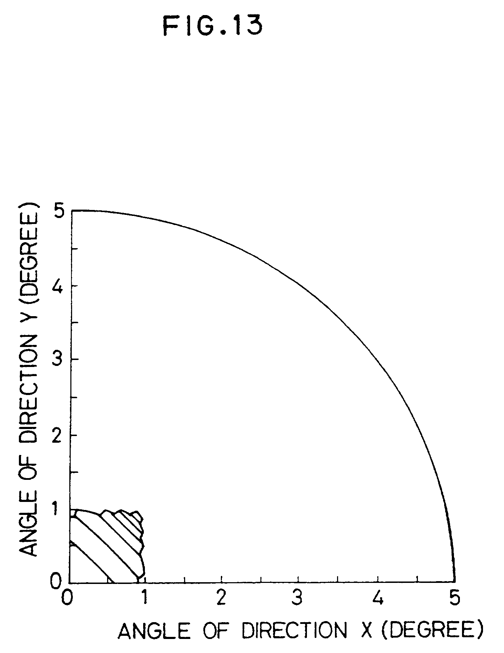

In the second embodiment, using second correction signals obtained by multiplying the values of the difference signal Δ1 and the difference signal Δ2 by a coefficient larger than one to form a new difference signal Δ1 and difference signal Δ2, and the same processing performed, a beam can be compressed more, and the side lobe can also be reduced further. That is, principally, by adopting a larger coefficient for multiplying the difference signal Δ1 and the difference signal Δ2, the beam width can be limitlessly small, and the side lobe can be also limitlessly small. For one such embodiment, the result of simulation is illustrated in Fig.13 when the correction difference signals, which multiply the values of the difference signal Δ1 and the difference signal Δ2 by two, are used as a new difference signal Δ1 and a new difference signal Δ2, and the same processing as described above is performed. Further, in this case, the same construction of antenna system can be used as for the simulation illustrated in Fig.11A and Fig.11B. Fig.13 illustrates the resulting pattern having two-dimensional beam compression and side lobe reduction, which has a contour drawing which is the same as that shown in Fig.11B.

As described hereinbefore, according to the second embodiment, beam width can be reduced two-dimensionally , and the side lobe can be reduced two-dimensionally . Moreover, beam width can be made narrower, and the side lobe can be made smaller by using correction signals to multiply the values of the difference signal Δ1 and the difference signal Δ2 by a coefficient larger than one to form a new difference signal Δ1 and a difference signal Δ2.

## Claims

1. A method of processing antenna patterns from an antenna device composed of a first antenna system comprising two similar antennas (1a,1a) of a monopulse power feed system disposed so as to lie in a first direction (x) corresponding to a direction in which beam width is to be compressed, and a second antenna system comprising two further similar antennas (1b,1b) of the monopulse power feed system disposed so as to lie in a second direction (y) extending at right angles to said first direction (x), with the central axis of the second antenna system coinciding with the central axis of the first antenna system, the method being characterised by the steps of scanning the antenna beam of the antenna device in directions which exclude said first and second directions (x,y), and of adding a signal obtained by subtracting a first difference signal Δ₁, representative of the difference between the received signals of the two antennas (1a,1a) of the first antenna system, from a first sum signal Σ₁, representative of the sum of the received signals of the two antennas (1a,1a)of the first antenna system, to a signal obtained by subtracting a second difference signal Δ₂, representative of the difference between the received signals from the two antennas (1b,1b) of the second antenna system, from a second sum signal Σ₂, representative of the sum of the received signals from the two antennas of the second antenna system, the signal resulting from said addition forming an output signal of the antenna device to achieve two-dimensional beam compression.

2. A method as claimed in claim 1, further comprising the step of arranging for said output signal to be zero when the value of the first sum signal Σ₁ from said first antenna system is equal to or smaller than the value of said first difference signal Δ₁ of that system, or when the value of the second sum signal Σ₂ from said second antenna system is equal to or smaller than the value of the second difference signal Δ₂ of that system, to perform two-dimensional beam compression and two-dimensional reduction in the side lobe.

3. A method as claimed in claim 1, further comprising the steps of forming first and second correction difference signals by multiplying each said difference signal Δ₁, Δ₂ of said first antenna system and said second antenna system by a coefficient larger than one, and performing two-dimensional beam compression and two-dimensional side-lobe reduction by performing processing such as to set said output signal to zero when the value of the first sum signal Σ₁ from said first antenna system is equal to or smaller than the value of the first correction difference signal or when the value of the second sum signal Σ₂ from said second antenna system is equal to or smaller than the value of the second correction difference signal, in the case of the subtraction of each said correction difference signals from each said sum signals Σ₁, Σ₂.

## Patentansprüche

1. Verfahren zur Verarbeitung von Antennenstrahlungscharakteristiken von einer Antennenvorrichtung, die ein erstes Antennensystem mit zwei ähnlichen Antennen (1a, 1a) eines Monopuls-Stromspeisesystems, das so angeordnet ist, daß es in einer ersten Richtung (x) liegt, die einer Richtung entspricht, in der die Keulenbreite komprimiert werden soll, und ein zweites Antennensystem mit zwei weiteren ähnlichen Antennen (1b, 1b) des Monopuls-Stromspeisesystems umfaßt, das so angeordnet ist, daß es in einer zweiten Richtung (y) liegt, die im rechten Winkel zu der genannten ersten Richtung (x) verläuft, wobei die Mittelachse des zweiten Antennensystems mit der Mittelachse des ersten Antennensystems übereinstimmt, wobei das Verfahren durch die folgenden Schritte gekennzeichnet ist: Abtasten der Antennenkeule der Antennenvorrichtung in anderen Richtungen als der genannten ersten und der genannten zweiten Richtung (x, y), und Addieren eines Signals, das durch Subtrahieren eines ersten Differenzsignals Δ₁, das für die Differenz zwischen den empfangenen Signalen der beiden Antennen (1a, 1a) des ersten Antennensystems repräsentativ ist, von einem ersten Summensignal Σ₁ erhalten wurde, das für die Summe der empfangenen Signale der beiden Antennen (1a, 1a) des ersten Antennensystems repräsentativ ist, zu einem Signal, das durch Subtrahieren eines zweiten Differenzsignals Δ₂, das für die Differenz zwischen den empfangenen Signalen von den beiden Antennen (1b, 1b) des zweiten Antennensystems repräsentativ ist, von einem zweiten Summensignal Σ₂ erhalten wurde, das für die Summe der empfangenen Signale von den beiden Antennen des zweiten Antennensystems repräsentativ ist, wobei das aus der Addition resultierende Signal ein Ausgangssignal der Antennenvorrichtung zur Erzielung einer zweidimensionalen Keulenkompression bildet.

2. Verfahren nach Anspruch 1, weiterhin umfassend den folgenden Schritt: Nullstellen des genannten Ausgangssignals, wenn der Wert des ersten Summensignals Σ₁ von dem genannten ersten Antennensystem gleich dem oder kleiner als der Wert des genannten ersten Differenzsignals Δ₁ des genannten Systems ist, oder wenn der Wert des zweiten Summensignals Σ₂ von dem genannten zweiten Antennensystem gleich dem oder kleiner als der Wert des zweiten Differenzsignals Δ₂ dieses Systems ist, um eine zweidimensionale Keulenkompression und eine zweidimensionale Nebenkeulenreduzierung zu erzielen.

3. Verfahren nach Anspruch 1, weiterhin umfassend die folgenden Schritte: Bilden eines ersten und eines zweiten Korrekturdifferenzsignals durch Multiplizieren jedes der genannten Differenzsignale Δ₁, Δ₂ des genannten ersten Antennensystems und des genannten zweiten Antennensystems mit einem Koeffizienten von größer als Eins, und Durchführen der zweidimensionalen Keulenkompression und der zweidimensionalen Nebenkeulenreduzierung durch Durchführen der Verarbeitung mit dem Ziel, das genannte Ausgangssignal auf Null zu stellen, wenn der Wert des ersten Summensignals Σ₁ von dem genannten ersten Antennensystem gleich dem oder kleiner als der Wert des ersten Korrekturdifferenzsignals ist oder wenn der Wert des zweiten Summensignals Σ₂ von dem genannten zweiten Antennensystem gleich dem oder kleiner als der Wert des zweiten Korrekturdifferenzsignals ist, wenn jedes der genannten Korrekturdifferenzsignale von jedem der genannten Summensignale Σ₁, Σ₂ subtrahiert wird.

## Revendications

1. Méthode de traitement de diagrammes d'antennes provenant d'un dispositif d'antennes composé d'un premier système d'antennes comprenant deux antennes semblables (1a,1a) d'un système d'alimentation mono-impulsion disposées de manière à reposer dans une première direction (x) correspondant à une direction dans laquelle la largeur de faisceau doit être comprimée, et un deuxième système d'antennes comprenant deux autres antennes semblables (1b,1b) du système d'alimentation mono-impulsion disposées de manière à reposer dans une deuxième direction (y) s'étendant à angle droit par rapport à ladite première direction (x), l'axe central du deuxième système d'antennes coïncidant avec l'axe central du premier système d'antennes, la méthode étant caractérisée par les étapes de balayage du faisceau d'antenne du dispositif d'antennes dans des directions qui excluent lesdites première et deuxième directions (x, y), et d'addition d'un signal obtenu en soustrayant un premier signal de différence Δ₁, représentatif de la différence entre les signaux reçus des deux antennes (1a, 1a) du premier système d'antennes, d'un premier signal de somme Σ₁, représentatif de la somme des signaux reçus des deux antennes (1a,1a) du premier système d'antennes, à un signal obtenu en soustrayant un deuxième signal de différence Δ₂, représentatif de la différence entre les signaux reçus des deux antennes (1b,1b) du deuxième système d'antennes, d'un deuxième signal de somme Σ₂, représentatif de la somme des signaux reçus des deux antennes du deuxième système d'antennes, le signal résultant de ladite addition formant un signal de sortie du dispositif d'antennes pour réaliser une compression de faisceau bidimensionnelle.

2. Méthode telle que revendiquée à la revendication 1, comprenant en outre l'étape consistant à faire en sorte que ledit signal de sortie soit zéro quand la valeur du premier signal de somme Σ₁ provenant dudit premier système d'antennes est égal ou inférieur à la valeur dudit premier signal de différence Δ₁ de ce système, ou quand la valeur du deuxième signal de somme Σ₂ provenant dudit deuxième système d'antennes est égal ou inférieur à la valeur du deuxième signal de différence Δ₂ de ce système, pour effectuer une compression de faisceau bidimensionnelle et une réduction bidimensionnelle du lobe latéral.

3. Méthode telle que revendiquée à la revendication 1, comprenant en outre les étapes de formation de premier et deuxième signaux de différence de correction en multipliant chaque dit signal de différence Δ₁, Δ₂ dudit premier système d'antennes et dudit deuxième système d'antennes par un coefficient supérieur à un, et d'exécution d'une compression de faisceau bidimensionnelle et d'une réduction de lobe latéral bidimensionnelle en effectuant un traitement de manière à établir ledit signal de sortie à zéro quand la valeur du premier signal de somme Σ₁ provenant dudit premier système d'antennes est égal ou inférieur à la valeur dudit premier signal de différence de correction ou quand la valeur du deuxième signal de somme Σ₂ provenant dudit deuxième système d'antennes est égal ou inférieur à la valeur du deuxième signal de différence de correction, dans le cas de la soustraction de chaque dit signal de différence de correction de chacun desdits signaux de somme Σ₁, Σ₂.
